# EUROPEAN PATENT APPLICATION

(11) **EP 2 842 851 A1**
(43) Date of publication of application: **04.03.2015**
(21) Application number: 14179479.2
(22) Date of filing: 01.08.2014
(51) Int. Cl.: B62J 7/08

(54) **Anchoring base**

(30) Priority: 26.08.2013 PT 10712813
(71) Applicant: Polisport Plásticos, S.A., 3720-024 Carregosa (PT)
(72) Inventor: Gonçalves, João Carlos Silva Costa, 3885-580 Esmoriz (PT)
(74) Representative: Ferreira, Maria Silvina

(57) **Abstract**

The present application describes an anchoring base for vehicle structures, such as a base for coupling child seats to bicycles consisting of a front leg (1) to whose ends side legs (2) are connected, which are in turn connected to a rear leg (3) forming a rectangular structure, that is, the base itself. The top face of said base is bordered by insert (4) wherein the ends of said insert (4) comprise support hooks (6). The rear leg (3) comprises a projection comprising a hole (7). The front leg (1) and the rear leg (3) comprise bores (8) enabling the adjustment of the base to different vehicle structures. The side legs (2) comprise on the lower face thereof a structure of cross-shaped shafts, which not only allows a reduction in weight, but also provides said base with high strength.

## Description

### Technical field

The present application describes an anchoring base for vehicle structures.

### Background

The existence of anchoring bases for motorized or non-motorized vehicles, such as the case of bicycles, is known in the art.

DE19801926 discloses a device which can provide a seat for one person when mounted onto a bicycle. This device comprises multiple anchoring points which, unlike the base of the present application, require the use of special tools.

Thus, the present application discloses an anchoring base, which aims at overcoming the need for special tools for the assembly thereof providing a single clamping device.

### Summary

The present application discloses an anchoring base comprising a front leg, to whose ends side legs are connected which are in turn connected to a rear leg comprising an upwardly sloping projection, which comprises a hole housing a clamping device.

In one embodiment, the top face of the anchoring base is bordered by an insert.

In another embodiment, the ends of the insert of the anchoring base comprise hooks and the side portions of said insert comprise reinforcements.

In yet another embodiment, the rear leg of the anchoring base.

In one embodiment, the front leg and the rear leg of the anchoring base comprise bores.

In another embodiment, the side legs of the anchoring base comprise a shaft structure on the underside thereof.

The bicycle comprising said anchoring base is also described in the present application.

### Brief Description of the Drawings

For an easier understanding of the art drawings are herein attached, which represent preferred embodiments, which are nevertheless not intended to limit the object of the present application.

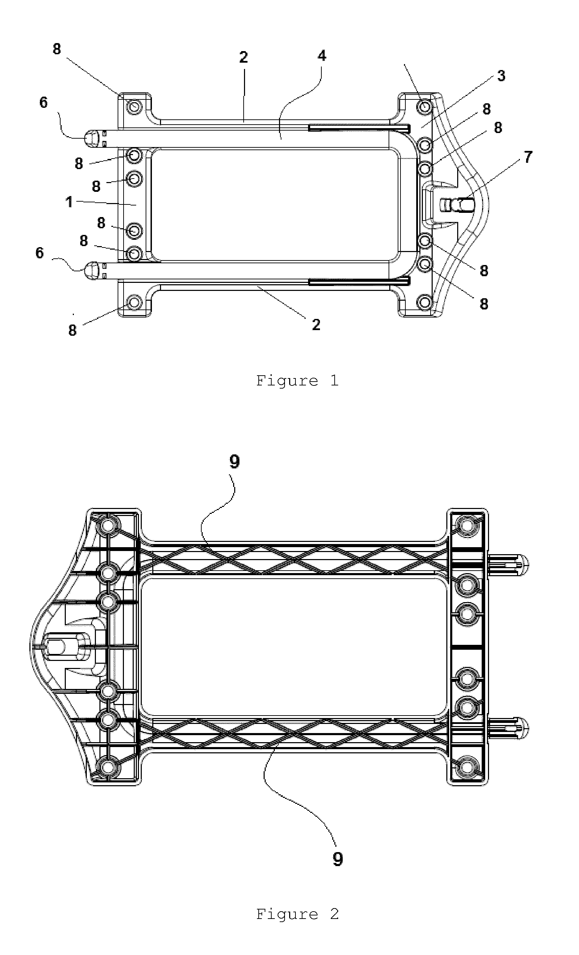

**Figure 1** shows a schematic representation of the anchoring base for vehicle structures, wherein the following reference numbers represent:
   1 - Front leg;
   2 - Side legs;
   3 - Rear leg;
   4 - Insert;
   6 - Hooks;
   7 - Hole;
   8 - Bores.
**Figure 2** shows a schematic representation of the anchoring base for vehicle structures, wherein the following reference number represents:
   9 - Shafts.

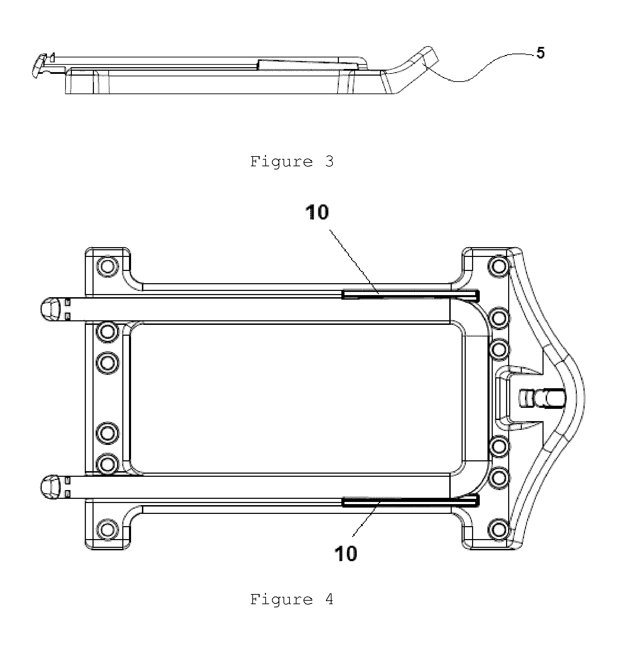

**Figure 3** shows a schematic representation of the anchoring base for vehicle structures, wherein the following reference number represents:
   5 - Projection.
**Figure 4** shows a schematic representation of the anchoring base for vehicle structures, wherein the following reference number represents:
   10 - Reinforcements.

### Description of an embodiment

The present application describes an anchoring base for vehicle structures, such as a base for coupling child seats to bicycles consisting of a front leg (1) to whose ends side legs (2) are connected, which are in turn connected to a rear leg (3) forming a rectangular structure, that is, the base itself. The top face of said base is bordered by insert (4) wherein the ends of said insert (4) comprise hooks (6) for supporting and anchoring said seats and wherein the side portions thereof comprise reinforcements (10) allowing a larger contact surface with the seat intended to be mounted therein, as well as the support thereof. The rear leg (3) comprises an upwardly sloping projection (5) comprising a hole (7) which houses a clamping device so that, by means of said clamping device, the seat is handled in a manner exempt from special tools. Both the front leg (1) and the rear leg (3) comprise bores (8) enabling the adjustment of the base to different trunk sizes. Likewise, the side legs (2) comprise on the lower face thereof a structure of cross-shaped shafts (9), which not only allows a reduction in weight, but also provides said base with high strength.

Obviously, the present embodiment is in no way restricted to the embodiments described herein and a person with ordinary skill in the art may provide plenty of changes thereto without departing from the general scope, as defined in the claims.

The preferred embodiments described above are obviously combinable with each other. The following claims define further preferred embodiments.

## Claims

1. Anchoring base 1 comprising a front leg to whose ends side legs are connected which are in turn connected to a rear leg comprising an upwardly sloping projection comprising a hole housing a fastener.

2. Anchoring base according to the preceding claim, wherein the top face of said base is bordered by an insert.

3. Anchoring base according to any of the preceding claims, wherein the ends of said insert comprise hooks and the side portions of said insert comprise reinforcements.

4. Anchoring base according to any of the preceding claims, wherein the front leg and rear leg comprise bores.

5. Anchoring base according to any of the preceding claims, wherein the side legs comprise a shaft structure on the underside thereof.

6. Bicycle comprising an anchoring base according to claims 1 to 5.
